# EUROPÄISCHE PATENTSCHRIFT

(11) **EP 1 973 722 B1**
(45) Veröffentlichungstag und Bekanntmachung des Hinweises auf die Patenterteilung: **07.07.2010**
(21) Anmeldenummer: 06829104.6
(22) Anmeldetag: 23.11.2006
(51) Int. Cl.: B29C 45/28

(54) **BETÄTIGUNGSVORRICHTUNG FÜR VERSCHLUSSNADELN IN SPRITZGIESSVORRICHTUNGEN MIT NADELVERSCHLUSSDÜSEN**
OPERATING DEVICE FOR SHUT-OFF NEEDLES IN INJECTION-MOULDING DEVICES WITH NEEDLE VALVE NOZZLES
DISPOSITIF D'ACTIONNEMENT DE POINTEAUX DE FERMETURE DANS DES DISPOSITIFS DE MOULAGE PAR INJECTION DOTES D'AJUTAGES FERMES PAR POINTEAU

(30) Priorität: 02.01.2006 DE 202006000036 U
(43) Veröffentlichungstag der Anmeldung: 01.10.2008
(73) Patentinhaber: Günther Heisskanaltechnik GmbH, 35066 Frankenberg/Eder (DE)
(72) Erfinder: GÜNTHER, Herbert, 35108 Allendorf/Eder (DE)
(74) Vertreter: Buchhold, Jürgen
(86) Internationale Anmeldenummer: PCT/EP2006/011212
(87) Internationale Veröffentlichungsnummer: WO 2007/085285

(56) Entgegenhaltungen:
- DE-A1- 2 948 624
- DE-A1- 19 611 880
- DE-A1- 19 907 116
- DE-C1- 19 955 320
- FR-A1- 2 708 230
- GB-A- 2 085 350
- JP-A- 9 225 965
- JP-A- 57 045 041
- JP-A- 2004 243 532
- US-A1- 4 497 621
- ESSINGER, J.: "Nadelverschlusstechnik im Einsatz"[Online] August 2005 (2005-08), Seiten 1-4, XP002421874 Gefunden im Internet: URL:http://www.guenther-heisskanal.de/Down load/Katalog/Deutsch/Kap_1.2Kd-Info1.pdf> [gefunden am 2007-02-22]
- "HARMONIE AUF ENGSTEM RAUM" PLASTVERARBEITER, HUETHIG GMBH, HEIDELBERG, DE, Bd. 49, Nr. 3, März 1998 (1998-03), Seiten 96-97, XP000767117 ISSN: 0032-1338

## Beschreibung

Die Erfindung betrifft eine Betätigungsvorrichtung für Verschlußnadeln in Spritzgießwerkzeugen mit Nadelverschlußdüsen gemäß dem Oberbegriff von Anspruch 1 sowie ein Spritzgießwerkzeug nach Anspruch 12.

Nadelverschlußdüsen werden in Spritzgießwerkzeugen eingesetzt, um eine fließfähige Masse bei einer vorgebbaren Temperatur unter hohem Druck einem trennbaren Formeinsatz zuzuführen. Sie haben meist pneumatisch oder hydraulisch angetriebene Verschlußnadeln, die Angußöffnungen im Formeinsatz periodisch öffnen und verschließen. Jede Verschlußnadel ist hierzu im werkzeugseitigen Bereich der Spritzgießvorrichtung axialverschieblich gelagert und im düsenseitigen Bereich bevorzugt mittig durch einen Strömungskanal für die zu verarbeitende Masse hindurchgeführt. Der Strömungskanal endet in einem Düsenendstück, das eine Düsenaustrittsöffnung bildet. In Schließstellung greift das untere Ende der Verschlußnadel in einen Dichtsitz ein, der im Düsenendstück oder im Formeinsatz ausgebildet ist.

Um mehrere Nadelverschlußdüsen in einem Werkzeug synchron öffnen und schließen zu können, ist es beispielsweise aus EP-A1-0 790 116 bekannt, die Verschlußnadeln an einer gemeinsamen Trägerplatte festzulegen, welche eine Hubbewegung in Längsrichtung der Verschlußnadeln ausführt. Die Trägerplatte ist hierzu stirnseitig zwischen zwei ortsfesten Anschlägen und seitlich zwischen zwei Führungsleisten angeordnet, die innerhalb einer Aufspannplatte längsverschieblich gelagert sind und an ihren der Trägerplatte zugewandten Seitenflächen schräg angeordnete Gleitsteine oder Gleitnocken aufweisen. Letztere greifen seitlich in die Trägerplatte ein, die mit schräg verlaufenden Nuten versehen ist. Werden die Führungsleisten mittels eines Antriebs in Längsrichtung hin- und her geschoben, bewegt sich die Trägerplatte senkrecht dazu auf und ab. Dadurch führen alle an der Trägerplatte befestigten Verschlußnadeln die gleiche Hubbewegung aus.

Eine solche Betätigungsvorrichtung hat den Nachteil, daß die Abmessungen der Trägerplatte und die Zahl der an dieser befestigten Verschlußnadeln fest vorgegeben ist. Erweiterungen sind daher nur durch Auswechseln von Trägerplatte und Führungsleisten möglich, was mit nicht unerheblichem Aufwand und entsprechenden Kosten verbunden ist.

Bei einem aus DE-A1-196 11 880 bekannten Spritzgießwerkzeug mit mehreren Nadelverschlußdüsen ist jede Verschlußnadel an einem separaten Nadelträgerelement befestigt. Letztere sind an zwei gegenüberliegenden Flachseiten mit schräg liegenden Führungsnocken versehen, die in schräg verlaufende Nuten eines gabelförmigen Schieberahmens eingreifen. Unterhalb der Flachseiten ist an jedem Nadelträgerelement ein zylindrischer Abschnitt ausgebildet, der in der Art eines Hubkolbens in einer Führungsbuchse axialverschieblich gelagert ist. Bewegt man den Schieberahmen hin und her, werden die einzelnen Nadelträgerelemente senkrecht dazu auf und ab bewegt.

Auch hier läßt sich nur eine begrenzte Zahl an Nadelträgerelementen hintereinander anordnen. Jedes weitere Element verlangt einen verlängerten Schieberahmen, der gesondert anzufertigen ist. Problematisch ist ferner, daß jede Verschlußnadel über ein elastisches Zwischenelement an ihrem Nadelträgerelement zu befestigen ist, was den Montageaufwand und die Herstellkosten weiter erhöht.

DE-A1-199 07 116 offenbart einen zwischen zwei Werkzeugplatten ausgebildeten Betätigungsmechanismus für Druckguß-Ventilelemente. Die einzelnen Ventilstifte einer Düsengruppe sind an einer gemeinsamen Ventilstiftplatte festgelegt, die randseitig mit Führungsbuchsen versehen ist und auf parallel zu den Ventilstiften verlaufenden Führungsbolzen auf- und abgleiten kann. Auf der Ventilstiftplatte sind zwei Betätigungsstäbe befestigt, die seitlich mehrere Gleitblöcke tragen. Letztere greifen in schräg verlaufende Nuten zweier Nockenelemente ein, die längsverschieblich zwischen der oberen Werkzeugplatte und je einer Halteplatte gelagert sind.

Da sowohl die Abstände der Führungsbolzen als auch die Lage der Betätigungsstäbe fest vorgegeben ist, können auch hier keine nachträglichen Veränderungen mehr vorgenommen werden. Weitere Verschlußnadeln lassen sich nur durch Austauschen der gesamten Ventilstiftplatte anbringen, was mit hohem konstruktivem Aufwand verbunden ist. Darüber hinaus wird durch die aufgesetzten Betätigungsstäbe und die zusätzlich notwendigen Halteplatten die Bauhöhe der Betätigungsvorrichtung relativ groß, so daß der Einsatz der Betätigungsvorrichtung, insbesondere in kleineren Werkzeugen begrenzt ist.

Ziel der Erfindung ist es, diese und weitere Nachteile des Standes der Technik zu vermeiden und eine kompakte Betätigungsvorrichtung für Spritzgießwerkzeuge mit Nadelverschlußdüsen zu schaffen, die alle Ventilnadeln stets synchron bewegt und mit gleicher Schließkraft beaufschlagt. Angestrebt wird insbesondere ein flexibler und einfach zu handhabender Aufbau, der kostengünstig nachträgliche Erweiterungen und/oder Änderungen zuläßt.

Eine Betätigungsvorrichtung für Verschlußnadeln in Spritzgießwerkzeugen nach dem Oberbegriff des Anspruchs 1 ist in "Nadelverschlusstechnik im Einsatz bei B. Braun", Kundenmagazin der Günther Heisskanaltechnik GmbH, Ausgabe August 2005, Seite 1 bis Seite 4, offenbart.

Hauptmerkmale der Erfindung sind im kennzeichnenden Teil von Anspruch 1 angegeben. Ausgestaltungen sind Gegenstand der Ansprüche 2 bis 11 und 12 bis 15.

Bei einer Betätigungsvorrichtung für Verschlußnadeln in Spritzgießwerkzeugen mit Nadelverschlußdüsen, mit einem Hubelement, an dem wenigstens zwei Verschlußnadeln festlegbar sind und das zwischen zwei in einer ersten Richtung längsverschieblich gelagerten Steuerschienen in einer zu der ersten Richtung quer verlaufenden zweiten Richtung bewegbar ist, wobei zwischen dem Hubelement und den Steuerschienen in zu der ersten Richtung und der zweiten Richtung schräg verlaufenden Nuten wenigstens zwei Gleitelemente angeordnet sind, die eine Bewegung der Steuerschienen entlang der ersten Richtung in eine Hubbewegung des Hubelements in der zweiten Richtung umsetzen, sieht die Erfindung vor, daß an den Steuerschienen wenigstens zwei weitere Steuerschienen ankoppelbar sind, zwischen denen wenigstens ein weiteres Hubelement angeordnet ist, an dem wenigstens zwei weitere Verschlußnadeln festlegbar sind, wobei zwischen dem weiteren Hubelement und den weiteren Steuerschienen in zu der ersten Richtung und der zweiten Richtung schräg verlaufenden Nuten wenigstens zwei Gleitelemente angeordnet sind, die eine Bewegung der weiteren Steuerschienen entlang der ersten Richtung in eine Hubbewegung des weiteren Hubelements in der zweiten Richtung umsetzen.

Dadurch ist es jederzeit möglich, die Betätigungsvorrichtung durch weitere Steuerschienen und weitere Hubelemente zu erweitern, ohne daß die bereits vorhandenen Bauelemente ausgetauscht oder verändert werden müssen. Das zusätzliche Hubelement wird mit den weiteren Steuerschienen einfach ergänzt, wobei letztere an die bereits vorhandenen Steuerschienen rasch und bequem ankoppelbar sind. Die gesamte Betätigungsvorrichtung ist mithin ohne großen Aufwand flexibel erweiterbar oder anpaßbar, wobei durch die Weiterverwendbarkeit der bisherigen Komponenten keine hohen Kosten entstehen.

Durch die Festlegung der Ventilnadeln an den gemeinsamen Hubelementen und die Kopplung der Steuerschienen ist sichergestellt, daß alle Ventilnadeln stets synchron bewegt und mit gleicher Schließkraft beaufschlagt werden.

Die Steuerschienen sind lösbar miteinander verbunden, so daß die Erweiterungen jederzeit wieder rückbaubar sind. Wichtig ist, daß zwischen den Steuerschienen entlang der ersten Richtung eine zugfeste Verbindung besteht, damit die Hubelemente stets zuverlässig betätigt werden.

Ein besonders flexibel und einfach zu handhabender Aufbau ergibt sich, wenn die Verbindungen zwischen den Steuerschienen Steckverbindungen sind. Diese sind ohne jegliches Werkzeug jederzeit herstellbar und wieder lösbar, so daß sich Umbauarbeiten rasch und kostengünstig durchführen lassen.

Jede Steuerschiene ist mit wenigstens einem hakenförmigen Ende versehen, wobei die hakenförmigen Enden bevorzugt gegengleich und/oder formgleich ausgebildet sind.

Die Erfindung sieht weiter vor, daß die Steuerschienen über ein Schubelement mit einem Antrieb verbunden bzw. verbindbar sind, wobei zwischen den Steuerschienen und dem Schubelement entlang der ersten Richtung eine zugfeste Verbindung besteht. Die dem Antrieb zugewandten Enden der Steuerschienen sind kraft- und/oder formschlüssig mit dem Schubelement in Eingriff bringbar. Die Steuerschienen und das Schubelement bilden zweckmäßig einen U-förmigen Rahmen.

Ein weiterer wichtiger Aspekt der Erfindung sieht vor, die dem Antrieb abgewandten Enden der Steuerschienen kraft- und/oder formschlüssig mit den hakenförmigen Enden der weiteren Steuerschienen in Eingriff bringbar sind.

Jedes Hubelement ist erfindungsgemäß in der zweiten Richtung zwangsgeführt, wobei die Hubplatten bevorzugt zwischen zwei Anschlägen angeordnet sind. Alternativ können die Hubelemente zwischen zwei gemeinsamen Anschlägen angeordnet sein, wobei die Hubelemente lösbar miteinander verbunden sein können.

Um die Betätigungsvorrichtung und die Ventilnadeln individuell an das Werkzeug anpassen zu können, sind die Ventilnadeln entlang der zweiten Richtung relativ zu dem Hubelement justierbar ausgebildet. Um darüber hinaus eine stets synchrone Stellbewegung bei gleichzeitigem Bewegungsausgleich gewährleisten zu können, sind die Ventilnadeln gemäß einem weiteren Aspekt der Erfindung axialfest und radial schwimmend an den Hubelementen festlegbar.

Die Hubelemente haben oder bilden in einer weiteren Ausführungsform der Erfindung zwischen den Ventilnadeln wenigstens eine Ausnehmung zur Durchführung eines Strömungskanals, eines Verteilerarms o.dgl.

Um eine präzise Führung der Steuerschienen zu erreichen, sind diese zwischen Führungselementen gleitgeführt Diese sind beispielsweise als Führungsschienen ausgebildet, die an oder in einer Aufspannplatte befestigt sind. Dabei weisen die Steuerschienen an ihren den Führungsschienen zugewandten Seitenflächen Gleitleisten auf, die in Nuten der Führungsschienen gleitgeführt sind.

Eine besondere Ausführungsform der Erfindung sieht vor, daß die Betätigungsvorrichtung in einem Spritzgießwerkzeug ausgebildet ist, insbesondere in oder an einer Aufspannplatte. Letztere ist hierzu mit einer Vertiefung zur Aufnahme der Betätigungsvorrichtung versehen, was die Montage vereinfacht.

Weitere wichtige Vorteile ergeben sich, wenn die Betätigungsvorrichtung bündig mit der Aufspannplatte abschließt. Die Bauhöhe des Spritzgießwerkzeugs wird dadurch nicht verändert.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Schrägansicht einer Betätigungsvorrichtung für Spritzgießwerkzeuge,
- Fig. 2: eine Draufsicht auf eine andere Ausführungsform einer Betätigungsvorrich- tung und
- Fig. 3: eine Detailansicht einer weiteren Ausführungsform einer Betätigungsvorrich tung.

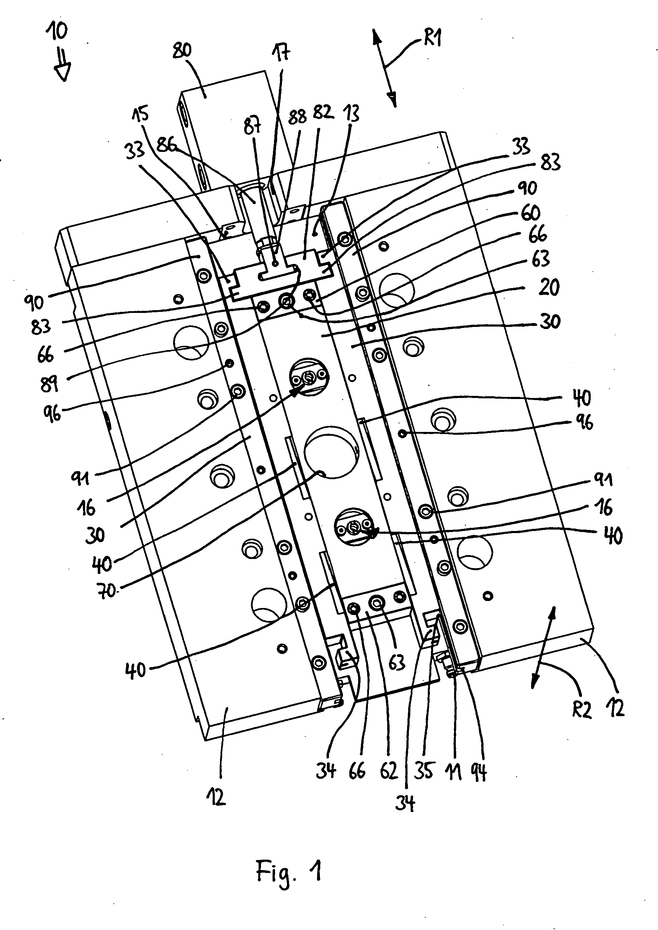

Die in Fig. 1 allgemein mit 10 bezeichnete Betätigungsvorrichtung ist für das Betätigen mehrerer Verschlußnadeln 16 in einer (nicht weiter dargestellten) Spritzgießvorrichtung vorgesehen. Letztere dient zur Herstellung von Formteilen aus einer fließfähigen Masse, beispielsweise einer Kunststoffschmelze. Hierzu sind unter einer (nicht gezeigten) Verteilerplatte mehrere (ebenfalls nicht dargestellte) Nadelverschlußdüsen angeordnet. Diese führen die zu verarbeitende Kunststoffschmelze einem trennbaren (gleichfalls nicht gezeigten) Formeinsatz zu, dessen Angußöffnungen von den Verschlußnadeln 16 periodisch geöffnet und geschlossen werden.

Über der Verteilerplatte sitzt eine Aufspannplatte 12, die zur Aufnahme der Betätigungsvorrichtung 10 mit einer rechteckigen Vertiefung oder Ausnehmung 13 versehen ist. Über Anschlüsse 11 lassen sich Schlauch- oder Rohrleitungen für ein Strömungsmedium anschließen, das in (nicht näher bezeichneten) Bohrungen die Aufspannplatte 12 durchströmt. Dadurch wird sowohl diese als auch die Betätigungsvorrichtung 10 stets optimal temperiert, insbesondere gekühlt, was sich günstig auf das Betriebsverhalten auswirkt.

Um die Verschlußnadeln 16 der Nadelverschlußdüsen simultan betätigen zu können, ist ein Hubelement 20 vorgesehen, an dem in der Ausführungsform von Fig. 1 zwei Verschlußnadeln 16 befestigt sind. Das Hubelement 20 ist bevorzugt als rechteckige Platte ausgebildet, die parallel zur Aufspannplatte 12 liegt und längsseits zwischen zwei verschieblich gelagerten Steuerschienen 30 angeordnet ist. Stirnseitig sitzt die Platte 20 zwischen zwei ortsfesten Anschlägen 60, 62, die mittels Schrauben 63 in der Vertiefung 13 der Aufspannplatte 12 fixiert sind. Paßstifte 66 sorgen für eine präzise Ausrichtung der im Querschnitt bevorzugt rechteckigen Anschläge 60, 62, wobei die Stifte 66 fest in der Aufspannplatte 12 fixiert sind und von (nicht näher bezeichneten) Bohrungen in den Anschlägen 60, 62 paßgenau aufgenommen werden.

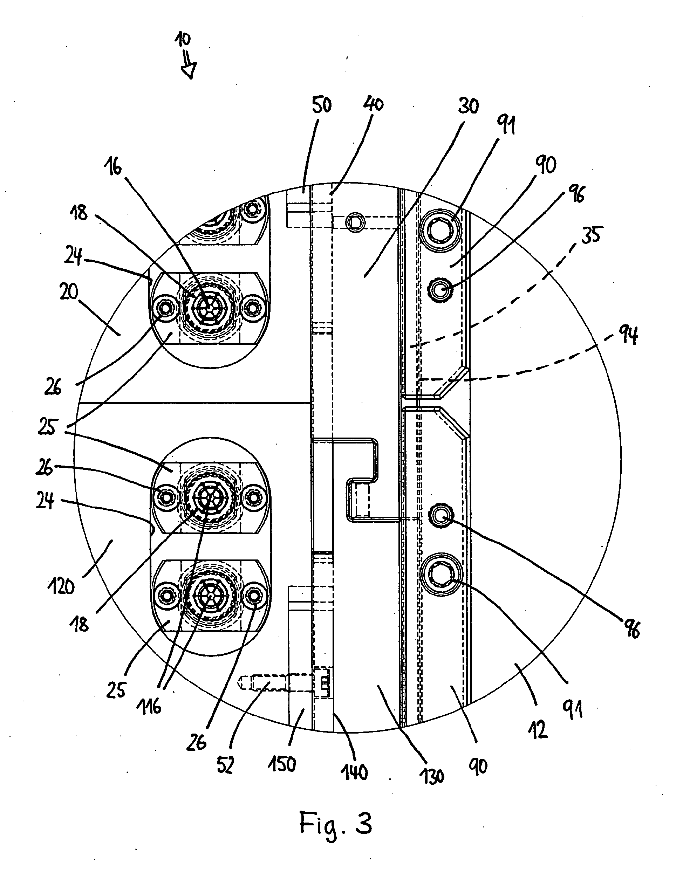

Die Hubplatte 20 trägt seitlich je zwei Gleitelemente 50, die in den Steuerschienen 30 parallel gleitgeführt sind (siehe Fig. 3). Letztere sind dabei an ihren der Hubplatte 20 zugewandten Seitenflächen mit je zwei schräg zur Aufspannplatte 12 verlaufenden Nuten 40 versehen, welche die Gleitelemente 50 bis auf ein geringes Bewegungsspiel aufnehmen.

Die Steuerschienen 30 sind innerhalb der Vertiefung 13 zwischen zwei ortsfesten Führungsschienen 90 in einer ersten Richtung R1 parallel zur Aufspannplatte 12 längsverschieblich angeordnet und über ein gemeinsames Schubelement 82 und ein Adapterstück 86 mit einem Antrieb 80 verbunden. Dieser ist bevorzugt außen an der Aufspannplatte 12 befestigt, wobei das Adapterstück 86 durch eine Öffnung 17 oder Ausnehmung in der Aufspannplatte 12 hindurchgeführt ist. Der Antrieb 80 kann ein elektrischer, pneumatischer oder hydraulischer Stellantrieb oder -motor sein, der bevorzugt von einer (gleichfalls nicht gezeigten) Steuerelektronik betätigt wird.

Jede Steuerschiene 30 ist antriebsseitig mit hakenförmigen Enden 33 versehen, die seitlich mit dem Schubelement 82 in Eingriff bringbar sind. Letzteres hat hierzu zwei stufenförmige Enden 83, die von den senkrecht zur ersten Richtung R1 nach innen gerichteten Haken 33 der Steuerschienen 30 formschlüssig aufgenommen werden. Dadurch entsteht eine in der ersten Richtung R1 stets zugfeste Verbindung, die senkrecht dazu lösbar ist. Die Bauteile 30, 82 lassen sich mithin jederzeit rasch austauschen, wenn beispielsweise eine längere und/oder breitere Hubplatte 20 Verwendung findet. Bei der Montage werden die Elemente 30, 82 einfach werkzeuglos ineinander gesteckt, wobei sie im Einbauzustand fest miteinander gekoppelt sind. Die Handhabung der gesamten Betätigungsvorrichtung ist äußerst einfach; die Montagekosten sind gering.

Die Verbindung zwischen dem Schubelement 82 und dem Adapterstück 86 bildet ein im Querschnitt T-förmiger Kulissenstein 88, der mittels eines Spannstifts 87 mit dem Adapterstück 86 verbunden ist und der - ebenfalls ohne Werkzeug - formschlüssig in das Schubelement 82 eingesteckt wird. Letzteres ist hierzu mit einer Aussparung 89 versehen.

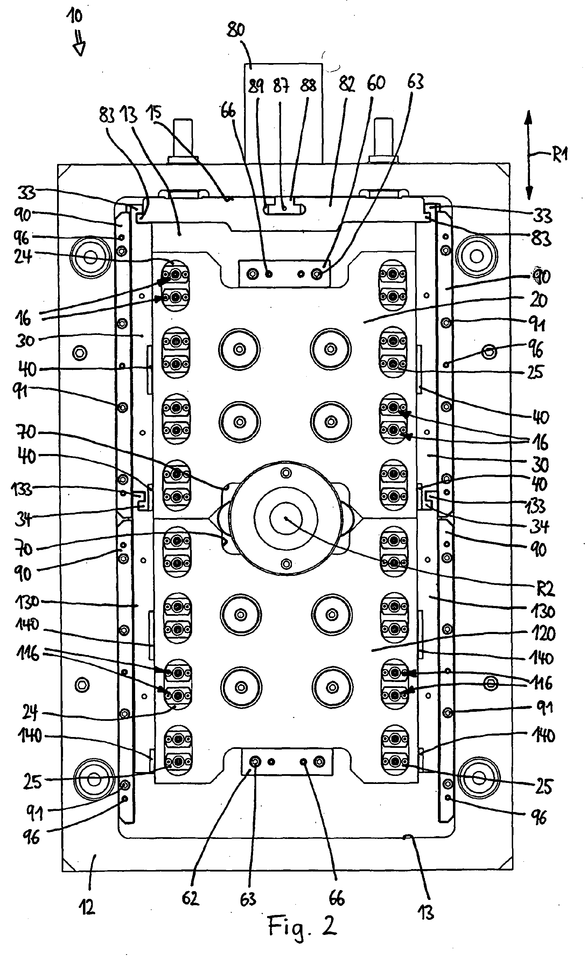

Wie Fig. 2 zeigt, lassen sich an den Steuerschienen 30 zwei weitere Steuerschienen 130 ankoppeln. Zwischen diesen liegt parallel zur Aufspannplatte 12 ein weiteres Hubelement 120, das als rechteckige Platte mit gleicher Breite an die erste Hubplatte 20 anschließt und an dem weitere Verschlußnadeln 116 befestigt sind. Beide Platten 20, 120 sitzen in Längsrichtung gemeinsam zwischen zwei ortsfesten Anschlägen 60, 62, die mittels Schrauben 63 in der Vertiefung 13 der Aufspannplatte 12 fixiert sind. Paßstifte 66 sorgen auch hier für eine präzise Ausrichtung der Anschläge 60, 62.

Zur Ankopplung der weiteren Steuerschienen 130 an die Steuerschienen 30 sind die dem Schubelement 82 abgewandten Enden 34 der Steuerschienen 30 und die dem Antrieb 80 zugewandten Enden 133 der weiteren Steuerschienen 130 ebenfalls hakenförmig ausgebildet, wobei die Hakenenden 34 der Steuerschienen 30 und die Hakenenden 133 der weiteren Steuerschienen 130 ,formgleich ausgebildet sind und jeweils senkrecht zur ersten Richtung R1 in die entgegengesetzte Richtung zeigen. Dabei greifen die Haken 34, 133 formschlüssig ineinander, so daß in der ersten Richtung R1 eine stets zugfeste Verbindung entsteht, die senkrecht dazu lösbar ist. Dadurch ist es möglich, die Steuerschienen 30, 130 über die Enden 34, 133 durch bloßes Einhaken bzw. Einstecken rasch und einfach miteinander zu verbinden. Die Betätigungsvorrichtung 10 läßt sich mithin ohne großen Aufwand jederzeit um eine weitere Hubplatte 120 erweitern, indem an die bereits vorhandenen Steuerschienen 30 weitere Steuerschienen 130 angehängt bzw. angekoppelt werden. Letztere sind über die Steuerschienen 30 und das Schubelement 82 mit dem Antrieb 80 verbunden, so daß keine zusätzliche Antriebseinheit notwendig ist. Auch dies wirkt sich äußerst günstig auf die Werkzeugkosten aus.

Die weitere Hubplatte 120 trägt - wie die Hubplatte 20 - seitlich je zwei Gleitelemente 150, die in den Steuerschienen 130 parallel gleitgeführt sind (siehe Fig. 3). Letztere sind dabei an ihren der Hubplatte 120 zugewandten Seitenflächen mit je zwei schräg zur Aufspannplatte 12 verlaufenden Nuten 140 versehen, welche die Gleitelemente 150 bis auf ein geringes Bewegungsspiel aufnehmen.

Die weiteren Steuerschienen 130 sind ebenfalls längsverschieblich zwischen zwei ortsfesten Führungsschienen 90 gleitgeführt. Letztere liegen seitlich in der Vertiefung 13 der Adapterplatte 12. Sie sind mittels Schrauben 91 in der Vertiefung 13 befestigt und an ihren den Steuerschienen 30, 130 zugewandten Seitenflächen mit je einer durchgehenden, parallel zur Adapterplatte 12 verlaufenden Führungsnut 94 versehen. Jede Führungsnut 94 nimmt mit geringem Bewegungsspiel eine Gleitleiste 35 auf, die jeweils an einer den Führungsschienen 90 zugewandten Seitenfläche der Steuerschienen 30, 130 ausgebildet ist. Paßstifte 96 sorgen für eine präzise Ausrichtung der Führungsschienen 90 innerhalb der Vertiefung 13. Sie sind fest in der Aufspannplatte 12 eingesteckt und werden von (nicht näher bezeichneten Bohrungen) in den Führungsschienen 90 paßgenau aufgenommen.

Man erkennt, daß die Steuerschienen 30, 130 und das Schubelement 82 einen U-förmigen Steckrahmen bilden, der die Hubplatten 20, 120 und (in Fig. 1) die Anschläge 60, 62 mit geringem Bewegungsspiel seitlich umfaßt und der außen zwischen den Führungsschienen 90 gleitgeführt ist. Bewegt der Antrieb 80 den Rahmen 30, 130, 82 in der ersten Richtung R1 periodisch hin- und her, werden die zwischen den Anschlägen 60, 62 zwangsgeführten Hubplatten 20, 120 von den in den Schrägnuten 40, 140 der Steuerschienen 30, 130 geführten Gleitelemente 50, 150 in einer zweiten Richtung R2 senkrecht zur Richtung R1 auf und ab bewegt. Die mit ihren (nicht näher bezeichneten) Stirnflächen flach aneinander liegenden Hubplatten 20, 120 führen folglich zusammen mit den daran festgelegten Verschlußnadeln 16, 116 eine Hubbewegung aus, wobei alle Verschlußnadeln 16, 116 stets zeitgleich und mit gleicher Schließkraft betätigt werden.

Damit die Hubplatten 20, 120 eine definierte und stets reproduzierbare Hubbewegung ausführen, ist die Bewegung des Schubelements 82 in der ersten Richtung R1 durch Anschläge begrenzt. Einen ersten Anschlag bildet eine Stirnwandung 15 der Vertiefung 13, während der dem Antrieb 80 zugewandte Anschlag 60 einen zweiten Anschlag bildet. Der Abstand zwischen der Stirnwandung 15 und dem Anschlag 60 gibt den Stellweg für das Schubelement 82 und damit für die Steuerschienen 30, 130 vor, die mithin zwischen wenigstens zwei definierten Positionen hin- und her bewegbar sind. Die Hubplatten 20, 120 führen - abhängig von der Schräglage der Nuten 40, 140 und den Gleitelementen 50, 150 - eine entsprechend definierte Hubbewegung aus, wobei man über den Antrieb 80 auch gezielt Zwischenpositionen anfahren kann, wenn beispielsweise die Verschlußnadeln 16, 116 in verschiedene Schließ- und Öffnungspositionen zu bringen sind.

Die lösbaren Steckverbindungen zwischen den Bauteilen 30, 82 und 82, 88 sowie 30, 130 haben den Vorteil, daß die Betätigungsvorrichtung 10 rasch und bequem von oben in der Ausnehmung 13 der Anschlagplatte 12 montiert werden kann. Lediglich die Anschläge 60, 62 sind bereits in der Vertiefung 13 eingesetzt. Die gesamte Betätigungsvorrichtung 10 besteht mithin aus nur wenigen Teilen mit einfacher Geometrie. Sie ist äußerst einfach zu montieren und jederzeit erweiterbar. Umgekehrt lassen sich die Hubelemente 20, 120, die Steuerschienen 30, 130, das Schubelement 82 und die Führungsschienen 90 jederzeit rasch und bequem aus der Aufspannplatte 12 entnehmen, um beispielsweise defekte Bauteile auszuwechseln, um die Verschlußnadeln 16, 116 wechseln zu können oder um sonstige Wartungsarbeiten durchzuführen.

Die Gleitelemente 50, 150 der Hubplatten 20, 120 sind bevorzugt längliche Paßfedern, die im gleichen Winkel zur Aufspannplatte 12 verlaufen wie die Nuten 40, 140 der

Steuerschienen 30, 130. Sie sind ferner in die Seitenflächen der Hubplatte 20 eingelassen und jeweils mittels einer oder zwei Schrauben 52 darin gesichert. Die Hubplatten 20, 120 sind hierzu mit entsprechenden (nicht näher bezeichneten) Ausnehmungen versehen, welche die Paßfedern 50 formschlüssig aufnehmen.

Die Verschlußnadeln 16, 116 sind von oben in die Hubplatten 20, 120 eingesetzt, die hierzu mit (nicht näher bezeichneten) Bohrungen versehen sind. Im Bereich der Hubplatten 20, 120 weist jede Nadel 16, 116 endseitig ein Gewinde auf, das in eine (nicht sichtbare) im wesentlichen rechteckige Halteplatte eingeschraubt ist. Eine Justiermutter 18 fixiert die Nadel 16, 116 gegenüber der Halteplatte, die flach auf der Hubplatte 20, 120 aufliegt. Dadurch sind die Nadeln 16, 116 entlang der zweiten Richtung R2 relativ zur Hubplatte 20, 120 individuell in der Länge verstellbar.

Jede Halteplatte liegt in einer (ebenfalls nicht gezeigten) Aussparung, deren Höhe nahezu exakt der Höhe der Halteplatte entspricht und deren Außenabmessungen größer sind als die der Halteplatte, so daß sich diese innerhalb der Aussparung radial bewegen kann. Eine mittels Schrauben 26 an der Hubplatte 20 befestigte Abdeckplatte 25 sichert die Halteplatte in der Aussparung. Die Halteplatte ist mithin in Axialrichtung der Verschlußnadeln 16, 116 mit geringstmöglichem Bewegungsspiel zwischen der Hubplatte 20, 120 und der Abdeckplatte 25 festgelegt, so daß sämtliche Nadeln 16, 116 stets präzise in Schließstellung gebracht und wieder geöffnet werden können. In Radialrichtung hingegen sind die Halteplatten schwimmend gelagert, so daß Auslenkungen der Nadeln 16, 116 innerhalb der Heißkanaldüsen während der Hubbewegungen ausgeglichen werden. Durch die Gestalt der Halteplatte sind die Nadeln 16, 116 zudem drehfest gegenüber der Hubplatte 20 angeordnet.

Die Nadeln 16, 116 ragen mit ihren Justiermuttern 18 durch die Abdeckplatten 25 hindurch. Damit jedoch die Nadelenden nicht zu weit über die Hubplatten 20, 120 hinausstehen, liegen die Halteplatten und die Abdeckplatten 25 in Vertiefungen 24, die von oben in die Hubplatten 20, 120 eingebracht sind. Die Bauhöhe der Betätigungsvorrichtung 10 bleibt dadurch gering.

Mittig zwischen den Vertiefungen 24 ist in der Hubplatte 20 eine zentrische Ausnehmung 70 eingebracht (siehe Fig. 1), die sich mit gleichem Innendurchmesser in der Aufspannplatte 12 fortsetzt. Die Ausnehmung 70 dient der Durchführung eines Strömungskanals, eines Verteilerarms o.dgl., insbesondere einer (nicht dargestellten) Maschinendüse oder einer Angußbuchse, welche die unterhalb der Aufspannplatte 12 liegende Verteilerplatte mit der zu verarbeitenden Kunststoffmasse versorgt. Der (nicht näher bezeichnete) Innendurchmesser der Ausnehmung 70 ist so bemessen, daß sich die Hubplatte 20 ungehindert bewegen kann.

In der Ausführungsform von Fig.2 wird die Ausnehmung 70 von beiden Hubplatten 20, 120 gemeinsam gebildet, die an ihren aneinander grenzenden Seiten jeweils mit einer Teilausnehmung versehen sind, so daß die Maschinendüse oder die Angußbuchse mittig zwischen den Hubplatten 20, 120 durchgeführt werden kann.

Den Abschluß der Betätigungsvorrichtung 10 bildet eine (nicht dargestellte) Abdeckplatte, die flach auf den Führungsschienen 90 aufliegt und an diesen mittels (ebenfalls nicht gezeigten) Schrauben gesichert werden. Die Abdeckplatte 19 sicher sämtliche Steckverbindungen und schließt bevorzugt bündig mit der Oberseite der Aufspannplatte 12 ab, so daß die Betätigungsvorrichtung 10 nicht über die Aufspannplatte 12 hinausragt. Die Vorrichtung 10 ist vielmehr nahezu vollständig in der Aufspannplatte 12 integriert, was sich äußerst günstig auf die Bauhöhe des Werkzeugs auswirkt. Lediglich der Antrieb 80 sitzt außen an der Aufspannplatte 12, was jedoch keine Auswirkung auf deren Bauhöhe hat.

In der Ausführungsform von Fig. 1 sind an dem Hubelement 20 zwei Verschlußnadeln 16 einer Düsengruppe befestigt. Man kann die Zahl der Verschlußnadeln 16 jedoch ohne weiteres erhöhen, z.B. indem die Hubplatte 20 entsprechend länger oder breiter ausgebildet wird. In dem Ausführungsbeispiel von Fig. 2 sind an jeder Hubplatte 20, 120 insgesamt 32 Verschlußnadeln 16, 116 angebracht, wobei jeweils zwei Nadeln 16, 116 mit geringem Abstand in einer Vertiefung 24 liegen. Für eine optimale Ausnutzung der gegebenen Werkzeugfläche können mithin mehrere Formeinsätze und damit mehrere Nadelverschlußdüsen sehr eng nebeneinander liegen.

Denkbar ist auch die Anordnung von zwei Betätigungsvorrichtungen 10 seitlich nebeneinander. Die Aufspannplatte 12 wird hierzu mit zwei nebeneinander liegenden Vertiefungen 13 oder mit einer gemeinsamen Vertiefung versehen, so daß die Steuerschienen 30, 130 und die Führungsschienen 90 der einzelnen Betätigungsvorrichtungen 10 parallel nebeneinander liegen.

Die Erfindung ist nicht auf eine der vorbeschriebenen Ausführungsformen beschränkt, sondern in vielfältiger Weise abwandelbar. So können die Steuerschienen 30 und das Schubelement 82 sowie die Steuerschienen 30, 130 untereinander auch kraftschlüssig miteinander verbunden sein, beispielsweise durch (nicht gezeigte) Rastelemente. Ferner kann man die Hubelemente 20, 120 lösbar miteinander verbinden. Die Halteplatten der Verschlußnadeln 16, 116 können als Scheiben ausgebildet sein, die an zwei gegenüberliegenden Seiten abgeflacht sind.

Die dem Antrieb 80 abgewandten (nicht näher bezeichneten) Enden der weiteren Steuerschienen 130 können ebenfalls hakenförmig ausgebildet sein, um weitere Steuerschienen ankoppeln zu können. Auch diese Hakenenden sind formgleich zu den Hakenenden 33, 34, 133 ausgebildet und so gestaltet, daß in der ersten Richtung R1 eine stets zugfeste Verbindung entsteht, die senkrecht dazu lösbar ist.

Man kann mithin die gesamte Betätigungsvorrichtung 10 als Baukastensystem gestalten, das mit wenigen Grundelementen 30, 130, 20, 120, 82, 90 individuell und flexibel zusammengesetzt werden kann. Sämtliche Bauteile lassen sich durch einfaches Einhaken bzw. Einstecken rasch miteinander verbinden und bei Bedarf wieder lösen. Die Steuerschienen sind dabei bevorzugt beidseitig mit hakenförmigen Enden versehen, was die Fertigung weiter vereinfacht. Die Betätigungsvorrichtung 10 läßt sich mithin ohne großen Aufwand jederzeit erweitern oder an einen veränderten Bedarf anpassen.

### Bezugszeichenliste

- R1: ersten Richtung
- R2: zweite Richtung

- 10: Betätigungsvorrichtung
- 11: Anschlüsse
- 12: Aufspannplatte
- 13: Vertiefung / Ausnehmung
- 14: Boden
- 15: Stirnwandung
- 16: Verschlußnadel
- 17: Öffnung
- 18: Justiermutter
- 20: Hubelement / Hubplatte
- 22: Seitenfläche
- 23: Ausnehmungen
- 24: Vertiefung
- 25: Abdeckplatte
- 26: Schraube
- 30: Steuerschiene
- 33: hakenförmiges Ende
- 34: hakenförmiges Ende
- 35: Gleitleiste
- 40: Nut
- 46: Schrauben
- 47: Schrauben
- 50: Gleitelement / Paßfeder
- 52: Schraube
- 60: Anschlag
- 62: Anschlag
- 63: Schraube
- 66: Paßstift
- 70: Ausnehmung
- 80: Antrieb
- 81: Schraube
- 82: Schubelement
- 83: stufenförmiges Ende
- 86: Adapterstück
- 87: Spannstift
- 88: Kulissenstein
- 89: Aussparung
- 90: Führungsschiene
- 91: Schraube
- 94: Führungsnut
- 96: Paßstift
- 116: Verschlußnadel
- 120: Hubelement / Hubplatte
- 130: Steuerschiene
- 133: hakenförmiges Ende
- 140: Nut
- 150: Gleitelement / Paßfeder

## Patentansprüche

1. Betätigungsvorrichtung (10) für Verschlussnadeln in Spritzgießwerkzeugen mit Nadelverschlussdüsen, mit einem Hubelement (20), an dem wenigstens zwei Verschlussnadeln (16) festlegbar sind und das zwischen zwei in einer ersten Richtung (R1) längsverschieblich gelagerten Steuerschienen (30) in einer zu der ersten Richtung (R1) quer verlaufenden zweiten Richtung (R2) bewegbar ist, wobei zwischen dem Hubelement (20) und den Steuerschienen (30) in zu der ersten Richtung (R1) und der zweiten Richtung (R2) schräg verlaufenden Nuten (40) wenigstens zwei Gleitelemente (50) angeordnet sind, die eine Bewegung der Steuerschienen (30) entlang der ersten Richtung (R1) in eine Hubbewegung des Hubelements (20) in der zweiten Richtung (R2) umsetzen, **dadurch gekennzeichnet,**
• **dass** an den Steuerschienen (30) wenigstens zwei weitere Steuerschienen (130) ankoppelbar sind, zwischen denen wenigstens ein weiteres Hubelement (120) angeordnet ist, an dem wenigstens zwei weitere Verschlussnadeln (116) festlegbar sind, wobei zwischen dem weiteren Hubelement (120) und den weiteren Steuerschienen (130) in zu der ersten Richtung (R1) und der zweiten Richtung (R2) schräg verlaufenden Nuten (140) wenigstens zwei Gleitelemente (150) angeordnet sind, die eine Bewegung der weiteren Steuerschienen (130) entlang der ersten Richtung (R1) in eine Hubbewegung des weiteren Hubelements (120) in der zweiten Richtung (R2) umsetzen, und
• **dass** jede Steuerschiene (30) mit wenigstens einem hakenförmigen Ende (33, 34, 133) versehen ist, wobei die hakenförmigen Enden (33, 34,133) gegengleich und/oder formgleich ausgebildet sind.

2. Betätigungsvorrichtung nach Anspruch 1, **dadurch gekennzeichnet, dass** die Steuerschienen (30, 130) lösbar miteinander verbunden sind, wobei zwischen den Steuerschienen (30, 130) entlang der ersten Richtung (R1) eine zugfeste Verbindung besteht.

3. Betätigungsvorrichtung nach einem der Ansprüche 1 oder 2, **dadurch gekennzeichnet, dass** die Verbindung zwischen den Steuerschienen (30, 130) eine Steckverbindung ist.

4. Betätigungsvorrichtung nach einem der Ansprüche 1 bis 3, **dadurch gekennzeichnet, dass** die Steuerschienen (30) über ein Schubelement (82) mit einem Antrieb (80) verbunden bzw. verbindbar sind, wobei zwischen den Steuerschienen (30) und dem Schubelement (82) entlang der ersten Richtung (R1) eine zugfeste Verbindung besteht und/oder wobei die dem Antrieb (80) zugewandten Enden (33) der Steuerschienen (30) kraft- und/oder formschlüssig mit dem Schubelement (82) in Eingriff bringbar sind und/oder wobei die Steuerschienen.

5. Betätigungsvorrichtung nach einem der Ansprüche 1 bis 4, **dadurch gekennzeichnet, dass** die dem Antrieb (80) abgewandten Enden (34) der Steuerschienen (30) kraft- und/oder formschlüssig mit den hakenförmigen Enden (133) der weiteren Steuerschienen (130) in Eingriff bringbar sind.

6. Betätigungsvorrichtung nach einem der Ansprüche 1 bis 5, **dadurch gekennzeichnet, dass** jedes Hubelement (20, 120) in der zweiten Richtung (R2) zwischen zwei Anschlägen (60, 62) zwangsgeführt ist.

7. Betätigungsvorrichtung nach einem der Ansprüche 1 bis 6, **dadurch gekennzeichnet, dass** die Hubelemente (20, 120) lösbar miteinander verbunden sind.

8. Betätigungsvorrichtung nach einem der Ansprüche 1 bis 7, **dadurch gekennzeichnet, dass** die Ventilnadeln (16, 116) entlang der zweiten Richtung (R2) relativ zu den Hubelementen (20, 120) justierbar sind und/oder axialfest und radial schwimmend an den Hubelementen (20, 120) festlegbar sind.

9. Betätigungsvorrichtung nach einem der Ansprüche 1 bis 8, **dadurch gekennzeichnet, dass** jedes Hubelement (20, 120) wenigstens eine Ausnehmung (70) zur Durchführung eines Strömungskanals, eines Verteilerarms o.dgl. des Spritzgießwerkzeugs aufweist.

10. Betätigungsvorrichtung nach einem der Ansprüche 1 bis 9, **dadurch gekennzeichnet, dass** die Steuerschienen (30, 130) zwischen Führungselementen (90) gleitgeführt sind.

11. Betätigungsvorrichtung nach Anspruch 10, **dadurch gekennzeichnet, dass** die Führungselemente (90) Führungsschienen sind, die an oder in einer Aufspannplatte (12) befestigt sind, wobei die Steuerschienen (30, 130) an ihren den Führungsschienen (90) zugewandten Seitenflächen Gleitleisten (35) aufweisen, die in Nuten (94) der Führungsschienen (90) gleitgeführt sind.

12. Spritzgießwerkzeug mit wenigstens einer Betätigungsvorrichtung (10) nach einem der Ansprüche 1 bis 11.

13. Spritzgießwerkzeug nach Anspruch 12, **dadurch gekennzeichnet, dass** die Betätigungsvorrichtung (10) in oder an einer Aufspannplatte (12) oder einer Aufspannplatte (12), die mit einer Vertiefung (13) zur Aufnahme der Betätigungsvorrichtung (10) versehen ist, ausgebildet ist, und/oder dass die Betätigungsvorrichtung (10) bündig mit der/einer Aufspannplatte (12) abschließt

14. Spritzgießwerkzeug nach einem der Ansprüche 11 bis 13, **dadurch gekennzeichnet, dass** wenigstens zwei Steuerschienen (30, 130) und wenigstens zwei Hubelemente (20, 120) in Längsrichtung hintereinander angeordnet sind und/oder dass wenigstens zwei Hubelemente parallel nebeneinander angeordnet sind.

15. Spritzgießwerkzeug nach Anspruch 14, **dadurch gekennzeichnet, dass** die Steuerschienen (30, 130) einen gemeinsamen Antrieb (80) aufweisen.

## Claims

1. Operating device (10) for shut-off needles in injection moulds with needle shut-off nozzles, with a lifting element (20) to which at least two shut-off needles are fixable and that, between two control rails (30) positioned longitudinally shift able to a first direction (R1), is movable in a second direction (R2) transversally to the first direction (R1), and with between the lifting element (20) and the control rails (30) in two grooves running diagonally to the first direction (R1) and the second direction (R2) at least two slider elements (5) are arranged to transform a movement of the control rails (30) along the first direction (R1) into a lifting movement of the lifting element (20) in the second direction (R2), **characterized in that** to the control rails (30) at least two more control rails (130) can be coupled between which at least one additional lifting element (120) is arranged, to which at least two additional shut-off needles (116) are fixable and that between the additional lifting element (120) and the additional control rails (130) in two grooves (140) running diagonally to the first direction (R1) and the second direction (R2) at least two slider elements (150) are arranged to transform a movement of the additional control rails (130) along the first direction (R1) into a lifting movement of the additional lifting element (120) in the second direction (R2), and each control rail (30) has at least one hook-shaped end (33, 34, 133) with such hook-shaped ends (33, 34, 133) are designed diametrically opposed and/or identical.

2. Operating device according to Claim 1, **characterized in that** the control rails (30, 130) are detachably connected to each other, with a connection resisting tensile strength existing between the control rails (30, 130) along the first direction (R1)

3. Operating device according to one of the Claims 1 or 2, **characterized in that** the connection between the control rails (30, 130) is a plug-type connection.

4. Operating device according to one of the Claims 1 to 3, **characterized in that** the control rails (30) are by a pusher element (82) connected or connectable to an actuation unit (80), with a connection resisting tensile strength existing between the control rails (30) and the pusher element (82) along the first direction (R1), and/or the control rails' (30) ends (33) facing the actuation unit (80) being suited to engage non-positively and/or positively in the pusher element (82), and/or with the control rails.

5. Operating device according to one of the Claims 1 to 4, **characterized in that** the ends (34) of the control rails (30) opposite to the actuation unit (80) can be engaged non-positively and/or positively in the hook-shaped ends (133) of the additional control rails (130).

6. Operating device according to one of the Claims 1 to 5, **characterized in that** each lifting element (20, 120) is in the second direction (R2) under forced guidance between two stoppers (60; 62).

7. Operating device according to one of the Claims 1 to 6, **characterized in that** the lifting elements (20, 120) are detachably connected to each other.

8. Operating device according to one of the Claims 1 to 7, **characterized in that** the valve needles (16, 116) are along the second direction (R2) adjustable relatively to the lifting elements (20, 120), and/or are suited to be solidly fixable in axial direction and/or radially floating to the lifting elements (20, 120).

9. Operating device according to one of the Claims 1 to 8, **characterized in that** each lifting element (20, 120) has at least one recess (70) to lead through a flow channel, a distributor arm, or similar of the injection mould.

10. Operating device according to one of the Claims 1 to 9, **characterized in that** the control rails (30, 130) are slide-guided between the guiding elements (90).

11. Operating device according to Claim 10, **characterized in that** the guiding elements (90) are guiding rails fixed to or in a mounting plate (12), and the control rails (30, 130) have on their lateral surfaces facing the guiding rails (90) slide shoulders (35) that are slide-guided in grooves (94) of the guiding rails (90).

12. Injection mould with at least one operating device (10) according to Claims 1 to 11.

13. Injection mould according to Claim 12, **characterized in that** the operating device (10) is designed in or on a mounting plate (12) or a mounting plate (12) with a cavity to receive the operating device (10), and/or that the operating device (10) ends even with the/a mounting plate (12).

14. Injection mould according to one of the Claims 11 to 13, **characterized in that** at least two control rails (30, 130) and at least two lifting elements (20, 120) are longitudinally arranged in tandem, and/or that at least two lifting elements are arranged side by side in parallel.

15. Injection mould according to Claim 14, **characterized in that** the control rails (30, 130) have a joint articulation unit (80).

## Revendications

1. Dispositif d'actionnement (10) d'aiguilles de fermeture dans des moules à injection avec buses à fermeture par aiguille, avec un élément de levage (20), sur lequel au moins deux aiguilles de fermeture (16) sont susceptibles d'être fixées et qui est mobile dans une deuxième direction (R2) s'étendant à la transversale de la première direction (R1), entre deux voies de came (30) logées en étant déplaçables en longueur dans une première direction (R1), au moins deux éléments coulissants (50), qui transforment un déplacement des voies de came (30) le long de la première direction (R1) en un mouvement de levage de l'élément de levage (20) dans la deuxième direction (R2) étant disposés entre l'élément de levage (20) et les voies de came (30), dans des rainures (40) s'étendant en inclinaison par rapport à la première direction (R1) et à la deuxième direction (R2), **caractérisé en ce que**, sur les voies de came (30) sont susceptibles d'être accouplées au moins deux voies de came (130) entre lesquelles est disposé au moins un élément de levage (120) supplémentaire sur lequel sont susceptibles d'être fixées au moins deux aiguilles de fermeture (116) supplémentaires, entre l'élément de levage (120) supplémentaire et les voies de came (130) supplémentaires, dans des rainures (140) s'étendant en inclinaison par rapport à la première direction (R1) et à la deuxième direction (R2) étant disposés au moins deux éléments coulissants (150) transformant un déplacement des voies de came (130) supplémentaires le long de la première direction (R1) en un mouvement de levage de l'élément de levage (120) supplémentaire dans la deuxième direction (R2) et **en ce que** chaque voie de came (30) est dotée d'au moins une extrémité en forme de crochet (33, 34, 133), les extrémités en forme de crochet (33, 34, 133) étant réalisées en version diamétralement opposée et/ou de forme identique.

2. Dispositif d'actionnement selon la revendication 1, **caractérisé en ce que** les voies de came (30, 130) sont reliées l'une à l'autre de façon amovible, une liaison résistant à la traction persistant entre les voies de came (30, 130), le long de la première direction (R1).

3. Dispositif d'actionnement selon l'une quelconque des revendications 1 ou 2, **caractérisé en ce que** la liaison entre les voies de came (30, 130) est une liaison par en fichage.

4. Dispositif d'actionnement selon l'une quelconque des revendications 1 à 3, **caractérisé en ce que** les voies de came (30) sont reliées ou susceptibles d'être reliées par l'intermédiaire d'un élément de poussée (82) à un entraînement (80), une liaison résistant à la traction persistant entre les voies de came (30) et l'élément de poussée (82), le long de la première direction (R1) et ou/les extrémités (33) des voies de came (30) qui font face à l'entraînement (80) étant susceptibles d'être amenées en engagement par complémentarité de force et/ou par complémentarité de forme avec l'élément de poussée (82) et ou les voies de came.

5. Dispositif d'actionnement selon l'une quelconque des revendications 1 à 4, **caractérisé en ce que** les extrémités (34) des voies de came (30) opposées à l'entraînement (80) sont susceptibles d'être amenées en engagement par complémentarité de force et/ou par complémentarité de forme avec les extrémités en forme de crochet (133) des voies de came (130) supplémentaires.

6. Dispositif d'actionnement selon l'une quelconque des revendications 1 à 5, **caractérisé en ce que** chaque élément de levage (20, 120) subit un guidage forcé dans la deuxième direction (R2), entre deux butées (60, 62).

7. Dispositif d'actionnement selon l'une quelconque des revendications 1 à 6, **caractérisé en ce que** les éléments de levage (20, 120) sont reliés entre eux de façon amovible.

8. Dispositif d'actionnement selon l'une quelconque des revendications 1 à 7, **caractérisé en ce que** les aiguilles de soupape (16, 116) sont susceptibles d'être ajustées le long de la deuxième direction (R2), par rapport aux éléments de levage (20, 120) et/ou sont susceptibles d'être fixées de manière solidaire en direction axiale et ou de manière flottante en direction radiale sur les éléments de levage (20, 120).

9. Dispositif d'actionnement selon l'une quelconque des revendications 1 à 8, **caractérisé en ce que** chaque élément de levage (20, 120) comporte au moins un évidement (70) pour le passage d'un canal d'écoulement d'un bras distributeur ou similaire du moule à injection.

10. Dispositif d'actionnement selon l'une quelconque des revendications 1 à 9, **caractérisé en ce que** les voies de came (30, 130) sont guidées par coulissement entre des éléments de guidage (90).

11. Dispositif d'actionnement selon la revendication 10, **caractérisé en ce que** les éléments de guidage (90) sont des glissières de guidage, qui sont fixées sur ou dans un plateau de bridage (12), les voies de came (30, 130) comportant sur leurs surfaces latérales faisant face aux glissières de guidage (90) des baguettes coulissantes (35) qui sont guidées par coulissement dans des rainures (94) des glissières de guidage (90).

12. Moule à injection avec au moins un dispositif d'actionnement (10) selon l'une quelconque des revendications 1 à 11.

13. Moule à injection selon la revendication 12, **caractérisé en ce que** le dispositif d'actionnement (10) est réalisé dans ou sur un panneau de bridage (12) ou un panneau de bridage (12), qui est doté d'un creux (13) pour le logement du dispositif d'actionnement (10) et/ou **en ce que** le dispositif d'actionnement (10) se termine à fleur du/d'un panneau de bridage (12).

14. Moule à injection selon l'une quelconque des revendications 11 à 13, **caractérisé en ce qu'**au moins deux voies de came (30, 130) et au moins deux éléments de levage (20, 120) sont disposés l'un derrière l'autre en direction longitudinale et/ou **en ce qu'**au moins deux éléments de levage sont disposés côte à côte à la parallèle.

15. Moule à injection selon la revendication 14, **caractérisé en ce que** les voies de came (30, 130) comportent un entraînement (80) commun.
